# EUROPEAN PATENT SPECIFICATION

(11) **EP 2 617 966 B1**
(45) Date of publication and mention of the grant of the patent: **22.05.2019**
(21) Application number: 13151333.5
(22) Date of filing: 15.01.2013
(51) Int. Cl.: F02C 7/32

(54) **Gas turbine engine accessory gearbox**
Gasturbinenmotor-Hilfsgerätegetriebe
Boîtier d'accessoire de moteur à turbine à gaz

(30) Priority: 18.01.2012 US 201213352369
(43) Date of publication of application: 24.07.2013
(73) Proprietor: United Technologies Corporation, Farmington, CT 06032 (US)
(72) Inventor: Duong, Hung, Unionville, CT 06085 (US)
(74) Representative: Dehns

(56) References cited:
- EP-A1- 2 505 879
- US-A1- 2005 183 529
- US-A1- 2011 289 936
- US-A1- 2012 247 250

## Description

### BACKGROUND OF THE INVENTION

This application relates to a gas turbine engine accessory gearbox, wherein the connection of a tower shaft drive to components in the gearbox is simplified.

Gas turbine engines are known, and typically include a compressor delivering compressed air into a combustion section. The air is mixed with fuel and burned in the combustion section, and products of this combustion pass downstream over turbine rotors, causing the rotors to rotate. The turbine rotors in turn drive the compressor.

A number of accessories are typically included with a gas turbine engine. As an example, electric generators, and various pumps for providing fuel, oil, hydraulics, etc., to the gas turbine engine are typically also driven by the turbine rotor. In addition, a starter is also typically provided to drive the gas turbine engine at startup. The starter, the several pumps, and the generators have all typically been included in an accessory gearbox, which is positioned outwardly of a core of the gas turbine engine.

Typically, a so-called tower shaft is driven by a turbine shaft, and in turn is connected to a gear within the accessory gearbox by a so-called layshaft. The layshaft typically extends parallel to an axis of rotation of the engine. The tower shaft is connected to drive the layshaft, and is received in a separate tower shaft housing. The layshaft is in its own housing, and extends into the accessory gearbox.

In this prior art, to remove the tower shaft for repair or replacement, one has necessarily needed to remove the accessory gearbox and the layshaft housing.

An accessory gearbox having the features of the preamble of claim 1 is disclosed in US 2011/289936 A1. A further gearbox is disclosed in US 2005/0183529 A1.

### SUMMARY OF THE INVENTION

The present invention provides an accessory gearbox for a gas turbine engine, as set forth in claim 1.

The first bevel gear may be on a side of the second bevel gear spaced away from the end of the tower shaft such that the second bevel gear is able to move away from the first bevel gear when the end cover has been removed.

The tower shaft housing may be formed integrally with the main gearbox housing.

The invention also provides a gas turbine engine as set forth in claim 4.

The input shaft may extend along an axis which is non-parallel to a drive axis of the gas turbine engine.

In a featured method according to claim 6, a tower shaft can be disassembled from a gas turbine engine by removing a cover from a housing that houses the tower shaft. The tower shaft has a bevel gear engaging a bevel gear of an input shaft. The tower shaft is removed from the housing without disassembling the housing from the gas turbine engine.

The first bevel gear may be on a side of the second bevel gear spaced away from the end of the tower shaft such that the second bevel gear may move away from the first bevel gear once the end cover has been removed.

The input shaft may extend along an angle that is non-parallel to a drive axis of the gas turbine engine.

These and other features of the invention would be better understood from the following specifications and drawings, the following of which is a brief description.

### BRIEF DESCRIPTION OF THE DRAWINGS

Figure 1 schematically shows a prior art gas turbine engine.
Figure 2 shows a prior art accessory gearbox.
Figure 3 shows a drive relationship in the known gearbox.
Figure 4 shows an embodiment of this application.
Figure 5A shows another feature of this application.
Figure 5B shows a disassembly step which can occur with this application.

### DETAILED DESCRIPTION

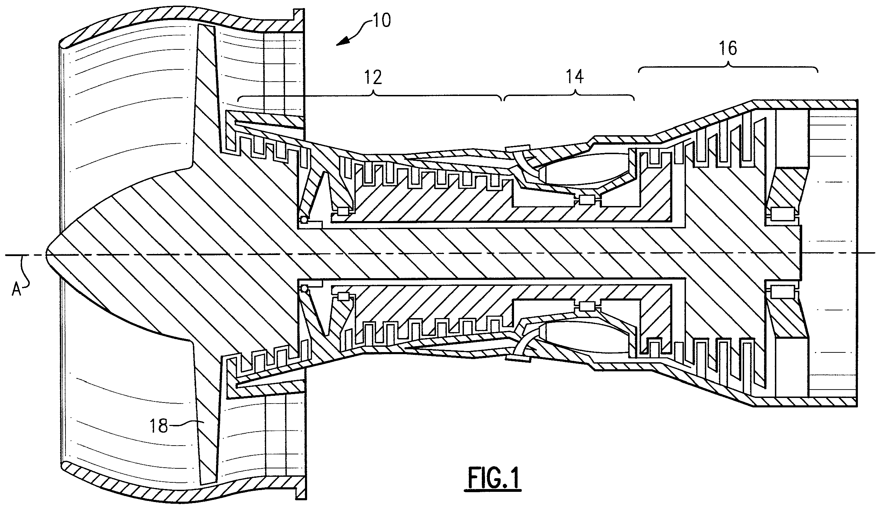

Figure 1 shows a prior art gas turbine engine 10, such as a turbofan gas turbine engine, circumferentially disposed about an engine centerline A. The engine 10 includes a fan 18, a compressor 12, a combustion section 14 and turbine sections 16. As is well known in the art, air compressed in the compressor 12 is mixed with fuel and burned in the combustion section 14 and expanded across turbine sections 16. The turbines includes rotors that rotate in response to the expansion, driving compressor rotors and fan 18. This structure is shown somewhat schematically in Figure 1. While one example gas turbine engine is illustrated, it should be understood this invention extends to any other type gas turbine engine for any application.

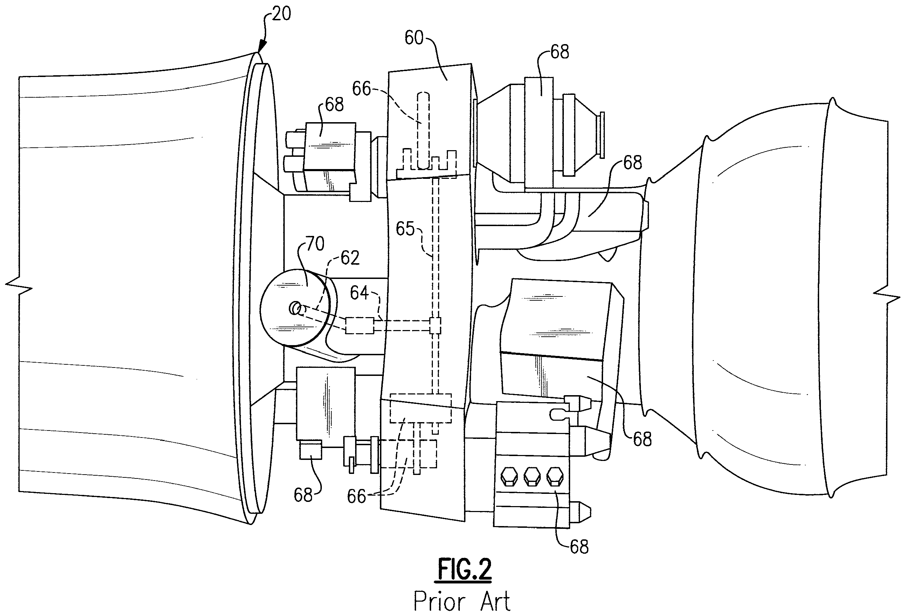

Figure 2 shows an accessory gearbox 60 positioned beneath the engine housing 20. As known, a tower shaft 62 is driven by a turbine shaft, and drives a layshaft 64. The layshaft 64 in turn drives a gear 65 that drives a number of gears 66 within the accessory gearbox 60. Several accessories 68 are in turn driven by the gears 66. Among the accessories may be an oil pump, a fuel pump, a hydraulic pump, an alternator, an electrical generator, and a starter, as examples.

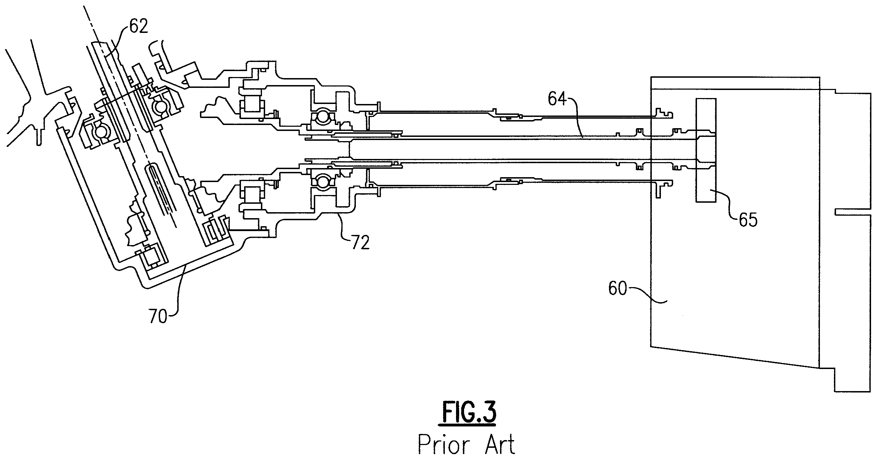

As shown in Figure 3, the tower shaft 62 is mounted in a housing 70 which is removable from a housing 72 housing the layshaft 64. Layshaft 64 extends into the gearbox 60, to drive gear 65, and hence gears 66 (see Figure 2). To remove the tower shaft 62, one has previously needed to remove the auxiliary gearbox 60, and the layshaft housing 72 along with the layshaft 64.

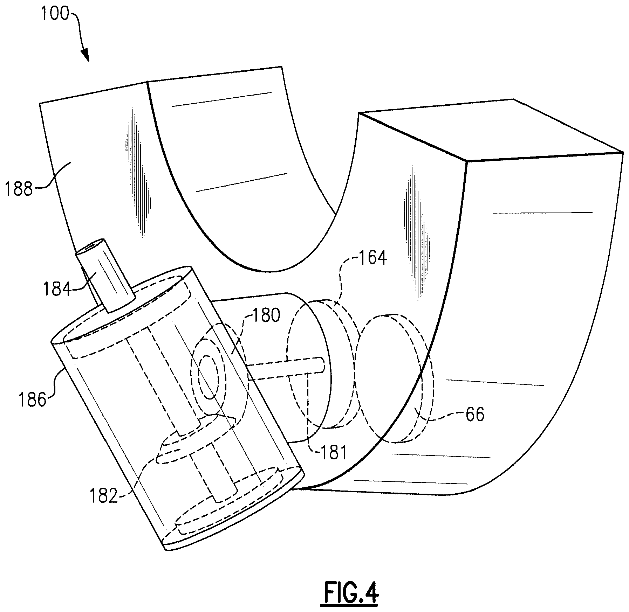

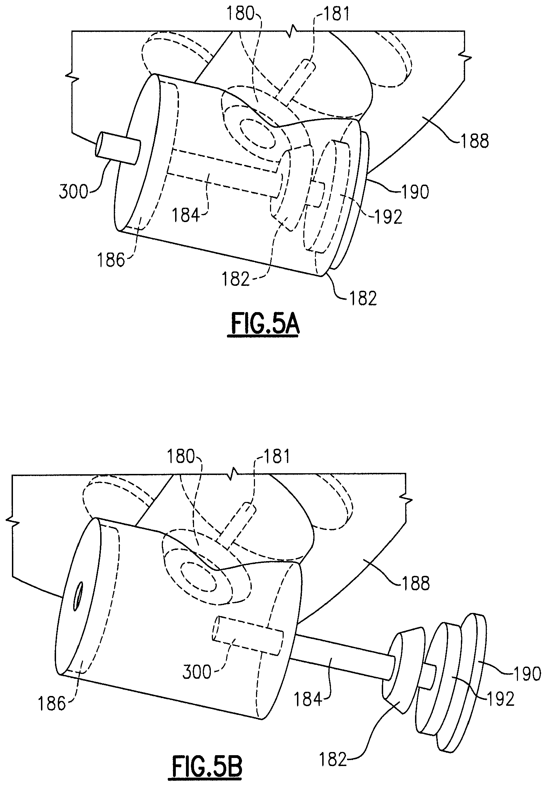

An embodiment 100 is shown in Figures 4, 5A and 5B. As shown in Figure 4, a housing 188 now houses a bevel gear 180 which generally replaces the layshaft. The bevel gear 180 extends inwardly and drives a gear 164 through shaft 181. Gear 164 in turn drives the gears 66 associated with the accessories in a manner not unlike that of Figure 2. However, the gear 180 extends along an axis which is not parallel to the drive axis of the engine, and thus the layshaft may be eliminated.

While the gear 180 as illustrated extends along an axis which is non-parallel to the drive axis of the engine, it can also be parallel. The disclosed arrangement simply provides more freedom with the regard to the positioning. The prior art arrangement with the several separate housings would have made it far too complex to have the axis not be parallel, and the disclosed arrangement provides the designer with the freedom of arranging the drive axis of the accessory box as would be indicated by other factors.

The tower shaft 184 engages a bevel gear 182 received within a housing 186. The housing 186 is formed integrally with the housing 188. As shown in Figure 5A, the angle between the gears 180 and 182 may be selected and designed into the design of the combined housing 186 and 188. The shaft 184 is shown to extend at an angle which is non-parallel to the drive axis of the engine receiving the accessory gearbox 188. While the housing 186 may be formed integrally with the housing 188, it may also be cast or otherwise formed separately, and then the two housings 186 and 188 fixed together by some means (welding, for example).

As shown in Figure 5A, an end cover 190 is bolted to a fixed portion of a bearing 192 which supports the shaft 184 for mounting the bevel gear 182. Another portion of the bearing is press-fit onto an end of the shaft 184 and supported in the fixed portion.

As shown in Figure 5B, one may remove the end cover 190, the bearing 192, and shaft 184 for replacement or repair without removing the accessory gearbox at all.

As would be appreciated by a worker of ordinary skill in this art, an input to drive the tower shaft 184 comes into an upper end 300, such that the tower shaft 184 may be driven from a shaft extending to the turbine rotors, or a drive shaft driven by the turbine rotors. In addition, as is clear, the bevel gear 182 engages the bevel gear 180 on an opposed end of the tower shaft 184 such that upon removal of the cover 190, the bevel gear 182 may merely move away from the bevel gear 180.

The combination of the integral housing 186 and 188 reduces the number of parts, and simplifies assembly and disassembly.

Although embodiments of this invention have been disclosed, a worker of ordinary skill in this art would recognize that certain modifications would come within the scope of this invention. For that reason, the following claims should be studied to determine the true scope and content of this invention.

## Claims

1. An accessory gearbox (100) for a gas turbine engine (10) comprising:
a main gearbox housing (188) for receiving a plurality of gears (66) to drive a plurality of accessories;
an input shaft (181) having a first bevel gear (180) at an outer end, and extending inwardly to transmit rotation to said plurality of gears (66);
a tower shaft (184) having a second bevel gear (182) engaging said first bevel gear (180) to in turn drive said input shaft (181); and
a tower shaft housing (186) for said tower shaft being fixed to the main gearbox housing (188); **characterised in that**:
a portion of said tower shaft (184) housing has an end cover (190) which is removable to allow removal of said tower shaft (184) without disassembling said main gearbox housing (188) from an engine;
said end cover (190) supports an end of said tower shaft (184) through a bearing (192), and is removable with the bearing (192), such that upon removal of said end cover (190) and said bearing (192), said tower shaft (184) may be removed; and
said tower shaft (184) extends outwardly from one end of said tower shaft housing (186) with said tower shaft (184) configured to receive a drive input at said one end, and said end cover (190) being at an opposed end of said tower shaft (184).

2. The accessory gearbox as set forth in claim 1, wherein said first bevel gear (180) is on a side of said second bevel gear (182) spaced away from said end of said tower shaft (184) such that said second bevel gear (182) may merely move away from said first bevel gear (180) when said end cover (190) has been removed.

3. The accessory gearbox as set forth in claim 1 or 2, wherein said tower shaft housing (186) is formed integrally with said main gearbox housing (188).

4. A gas turbine engine (10) incorporating: a main engine housing (20) housing a compressor (12), combustor (14) and a turbine (16), and an accessory gearbox (100) as set forth in any preceding claim mounted outwardly of said main engine housing (20).

5. The gas turbine engine as set forth in claim 4, wherein said input shaft (181) extends along an axis which is non-parallel to a drive axis (A) of the gas turbine engine (10).

6. A method of disassembling a tower shaft (184) from a gas turbine engine (10) comprising the accessory gearbox of claim 1, the method comprising the steps of:
removing the cover (190) and said bearing (192) from the tower shaft housing (186); and
then removing said tower shaft (184) from said tower shaft housing (186) without disassembling said tower shaft housing (186) from the gas turbine engine (10).

7. The method as set forth in claim 6, wherein said first bevel gear (180) is on a side of said second bevel gear (182) spaced away from said end of said tower shaft (184) such that said second bevel gear (182) may merely move away from said first bevel gear (180) when said end cover (190) has been removed.

8. The method set forth in claim 6 or 7, wherein said input shaft (181) extends along an angle that is non-parallel to a drive axis (A) of the gas turbine engine (10).

## Patentansprüche

1. Hilfsgerätegetriebe (100) für ein Gasturbinentriebwerk (10), das Folgendes umfasst:
ein Hauptgetriebegehäuse (188) zum Aufnehmen einer Vielzahl von Zahnrädern (66) zum Antreiben einer Vielzahl von Hilfsgeräten;
eine Eingabewelle (181), die ein erstes Kegelrad (180) an einem ersten äußeren Ende aufweist und sich nach innen erstreckt, um eine Drehung an die Vielzahl von Zahnrädern (66) zu übertragen;
eine radiale Übertragungswelle (184), die ein zweites Kegelrad (182) aufweist, welches das erste Kegelrad (180) in Eingriff nimmt, um seinerseits die Eingabewelle (181) anzutreiben; und
ein Gehäuse (186) der radialen Übertragungswelle, zum Fixieren der radialen Übertragungswelle an dem Hauptgetriebegehäuse (188); **dadurch gekennzeichnet, dass**:
ein Abschnitt des Gehäuses der radialen Übertragungswelle (184) eine Endabdeckung (190) aufweist, die entfernbar ist, um ein Entfernen der radialen Übertragungswelle (184) aus dem Getriebe ohne eine Demontage des Hauptgetriebegehäuses (188) zu ermöglichen;
die Endabdeckung (190) ein Ende der radialen Übertragungswelle (184) durch ein Lager (192) stützt und mit dem Lager (192) entfernbar ist, sodass nach einem Entfernen der Endabdeckung (190) und des Lagers (192) die radiale Übertragungswelle (184) entfernt werden kann; und
die radiale Übertragungswelle (184) sich von einem Ende des Gehäuses (186) der radialen Übertragungswelle nach außen erstreckt, wobei die radiale Übertragungswelle (184) dazu konfiguriert ist, eine Antriebseingabe an dem einen Ende zu empfangen, und wobei die Endabdeckung (190) sich an einem gegenüberliegenden Ende der radialen Übertragungswelle (184) befindet.

2. Hilfsgerätegetriebe nach Anspruch 1, wobei das erste Kegelrad (180) sich auf einer Seite des zweiten Kegelrads (182), die von dem ersten Ende der radialen Übertragungswelle (184) beabstandet ist, befindet, sodass das zweite Kegelrad (182) sich lediglich von dem ersten Kegelrad (180) wegbewegen kann, wenn die Endabdeckung (190) entfernt worden ist.

3. Hilfsgerätegetriebe nach Anspruch 1 oder 2, wobei das Gehäuse (186) der radialen Übertragungswelle einstückig mit dem Hauptgetriebegehäuse (188) ausgebildet ist.

4. Gasturbinentriebwerk (10), das Folgendes enthält:
ein Hauptgetriebegehäuse (20), das einen Verdichter (12), einen Brenner (14) und eine Turbine (16) beherbergt, und
ein Hilfsgerätegetriebe (100) nach einem der vorhergehenden Ansprüche, das außerhalb des Hauptgetriebegehäuses (20) befestigt ist.

5. Gasturbinentriebwerk nach Anspruch 4, wobei die Eingabewelle (181) sich entlang einer Achse erstreckt, die nichtparallel mit einer Antriebsachse (A) des Gasturbinentriebwerks (10) ist.

6. Verfahren zum Demontieren einer radialen Übertragungswelle (184) aus einem Gasturbinentriebwerk (10), welches das Hilfsgerätegetriebe nach Anspruch 1 umfasst, wobei das Verfahren Folgendes umfasst:
Entfernen der Abdeckung (190) und des Lagers (192) von dem Gehäuse (186) der radialen Übertragungswelle; und
danach Entfernen der radialen Übertragungswelle (184) von dem Gehäuse (186) der radialen Übertragungswelle ohne ein Demontieren des Gehäuses (186) der radialen Übertragungswelle von dem Gasturbinentriebwerk (10).

7. Verfahren nach Anspruch 6, wobei das erste Kegelrad (180) sich auf einer Seite des zweiten Kegelrads (182), die von dem Ende der radialen Übertragungswelle (184) weg beabstandet ist, befindet, sodass das zweite Kegelrad (182) sich von dem ersten Kegelrad (180) lediglich wegbewegen kann, wenn die Endabdeckung (190) entfernt worden ist.

8. Verfahren nach Anspruch 6 oder 7, wobei die Eingabewelle (181) sich entlang eines Winkels erstreckt, der nichtparallel mit der Antriebsachse (A) des Gasturbinentriebwerks (10) ist.

## Revendications

1. Boîtier d'accessoires (100) pour un moteur à turbine à gaz (10) comprenant :
un logement de boîtier principal (188) pour recevoir une pluralité d'engrenages (66) pour entraîner une pluralité d'accessoires ;
un arbre d'entrée (181) ayant un premier engrenage conique (180) à une extrémité externe, et s'étendant vers l'intérieur pour transmettre une rotation à ladite pluralité d'engrenages (66) ;
un arbre de commande de support d'accessoires (184) ayant un second engrenage conique (182) en prise avec ledit premier engrenage conique (180) pour entraîner à son tour ledit arbre d'entrée (181) ; et
un logement d'arbre de commande de support d'accessoires (186) pour ledit arbre de commande de support d'accessoires étant fixé au logement de boîtier principal (188) ; **caractérisé en ce que** :
une partie dudit logement de l'arbre de commande de support d'accessoires (184) possède un couvercle d'extrémité (190) qui peut être enlevé pour permettre le retrait dudit arbre de commande de support d'accessoires (184) sans démonter ledit logement de boîtier principal (188) d'un moteur ;
ledit couvercle d'extrémité (190) supporte une extrémité dudit arbre de commande de support d'accessoires (184) par le biais d'un palier (192), et peut être retiré avec le palier (192), de telle sorte que lors du retrait dudit couvercle d'extrémité (190) et dudit palier (192), ledit arbre de commande de support d'accessoires (184) peut être retiré ; et
ledit arbre de commande de support d'accessoires (184) s'étend vers l'extérieur depuis une extrémité dudit logement d'arbre de commande de support d'accessoires (186) avec ledit arbre de commande de support d'accessoires (184) configuré pour recevoir une entrée d'entraînement à ladite une extrémité, et
ledit couvercle d'extrémité (190) étant à une extrémité opposée dudit arbre de commande de support d'accessoires (184) .

2. Boîtier d'accessoires selon la revendication 1, dans lequel ledit premier engrenage conique (180) est sur un côté dudit second engrenage conique (182) espacé de ladite extrémité dudit arbre de commande de support d'accessoires (184) de telle sorte que ledit second engrenage conique (182) peut simplement s'écarter dudit premier engrenage conique (180) lorsque ledit couvercle d'extrémité (190) a été retiré.

3. Boîtier d'accessoires selon la revendication 1 ou 2, dans lequel ledit logement d'arbre de commande de support d'accessoires (186) est formé d'un seul tenant avec ledit logement de boîtier principal (188).

4. Moteur à turbine à gaz (10) intégrant :
un logement de moteur principal (20) logeant un compresseur (12), une chambre de combustion (14) et une turbine (16), et un boîtier d'accessoires (100) selon une quelconque revendication précédente monté à l'extérieur dudit logement de moteur principal (20).

5. Moteur à turbine à gaz selon la revendication 4, dans lequel ledit arbre d'entrée (181) s'étend le long d'un axe qui est non-parallèle à un axe d'entraînement (A) du moteur à turbine à gaz (10).

6. Procédé de démontage d'un arbre de commande de support d'accessoires (184) d'un moteur à turbine à gaz (10) comprenant le boîtier d'accessoires selon la revendication 1, le procédé comprenant les étapes de :
retrait du couvercle (190) et dudit palier (192) du logement d'arbre de commande de support d'accessoires (186) ; et
retrait ensuite dudit arbre de commande de support d'accessoires (184) dudit logement d'arbre de commande de support d'accessoires (186) sans démonter ledit logement d'arbre de commande de support d'accessoires (186) du moteur à turbine à gaz (10).

7. Procédé selon la revendication 6, dans lequel ledit premier engrenage conique (180) est sur un côté dudit second engrenage conique (182) espacé de ladite extrémité dudit arbre de commande de support d'accessoires (184) de telle sorte que ledit second engrenage conique (182) peut simplement s'écarter dudit premier engrenage conique (180) lorsque ledit couvercle d'extrémité (190) a été retiré.

8. Procédé selon la revendication 6 ou 7, dans lequel ledit arbre d'entrée (181) s'étend le long d'un angle qui est non-parallèle à un axe d'entraînement (A) du moteur à turbine à gaz (10).
